(19) Europäisches Patentamt
European Patent Office
Office européen des brevets

(11) **EP 1 055 865 B2**

(12) **NEUE EUROPÄISCHE PATENTSCHRIFT**

Nach dem Einspruchsverfahren

(45) Veröffentlichungstag und Bekanntmachung des Hinweises auf die Entscheidung über den Einspruch:
**29.10.2014 Patentblatt 2014/44**

(45) Hinweis auf die Patenterteilung:
**27.06.2007 Patentblatt 2007/26**

(21) Anmeldenummer: **00110635.0**

(22) Anmeldetag: **18.05.2000**

(51) Int Cl.:
***F21S 8/06*** *(2006.01)*

(54) **Hängeleuchte mit indirekter Lichtabstrahlung**

Light fixture of the hanging type with indirect lighting

Lampe suspendue avec éclairage indirect

(84) Benannte Vertragsstaaten:
**AT BE CH CY DE DK ES FI FR GB GR IE IT LI LU MC NL PT SE**
Benannte Erstreckungsstaaten:
**SI**

(30) Priorität: **25.05.1999 DE 19923987**
                **20.12.1999 DE 19961493**

(43) Veröffentlichungstag der Anmeldung:
**29.11.2000 Patentblatt 2000/48**

(73) Patentinhaber: **Siteco Beleuchtungstechnik GmbH**
**83301 Traunreut (DE)**

(72) Erfinder:
• **Belloni, Paola, Dr.**
  **83278 Traunstein (DE)**

• **Leibig, Joachim**
  **83374 Traunwalchen (DE)**
• **Prodell, Peter**
  **83308 Trostberg (DE)**

(74) Vertreter: **Schohe, Stefan et al**
**Boehmert & Boehmert**
**Anwaltspartnerschaft mbB**
**Patentanwälte Rechtsanwälte**
**Pettenkoferstrasse 20-22**
**80336 München (DE)**

(56) Entgegenhaltungen:
**EP-A- 0 846 915      WO-A1-00/16006**
**DE-U1- 29 903 298    US-A- 5 408 388**
**US-A- 5 594 830**

EP 1 055 865 B2

**Beschreibung**

Die Erfindung betrifft eine Leuchte zum Abhängen von einer Decke oder dergleichen, nachfolgend auch Hänge- oder Pendelleuchte genannt, mit einer oder mehreren Lampen und einem von einer Lampe beabstandeten zumindest teilweise lichtdurchlässigen Körper, auf den auf einer ersten Außenseite von einer Lampe Licht eingestrahlt wird und der auf einer zweiten Außenseite eine Lichtaustrittsfläche aufweist, wobei eine Grenzfläche des Körpers zwischen zwei Medien mit unterschiedlichem Brechungsindex mit einer lichtbrechenden Struktur versehen ist. Eine derartige Leuchte ist beispielsweise aus EP 0 846 915 A1 bekannt.

Bei der in der EP 0 846 915 A1 beschriebenen Leuchte wird das Licht einer Lampe von einer Schmalseite aus in einen Vollichtleiter eingekoppelt und mittels einer Prismenstruktur an der Lichtaustrittsfläche ausgekoppelt. Da häufig mehrere Reflexionen in dem Lichtleiter erforderlich sind, um das Licht an der Lichtaustrittsfläche auskoppeln zu können, sind die Lichtverluste in dem Lichtleiter relativ groß. Hinzu kommt, daß die bekannten Prismenstrukturen, wie sie beispielsweise aus US-PS 5 396 350 und US-PS 5 555 109 bekannt sind, nur eine geringe Auskoppeleffizienz für das auf die Lichtaustrittsfläche einfallende Licht aufweisen. Die Auskopplung eines Indirektanteils aus einem Vollichtleiter ist aufwendig. Daher wurde nach dem Stand der Technik ein Reflektor verwendet, der einen Teil des Lichts direkt an dem Vollichtleiter vorbei nach oben zur indirekten Beleuchtung reflektiert.

US-PS 5 594 830 offenbart eine Beleuchtungseinrichtung für LCD-Anzeigen, welche einen keilförmigen transparenten Körper aufweist, in den an der der Keilspitze gegenüberliegenden Seitenfläche Licht in den Körper eingekoppelt wird. Dieses Licht wird durch Reflexion in dem Körper geleitet und selektiv aus dem Körper an einer an die Lichteintrittsseite anschließenden Lichtaustrittsfläche ausgekoppelt. In einer bestimmten Ausführungsform dieser Beleuchtungseinrichtung können auch an der der Lichtaustrittsfläche der Einrichtung gegenüberliegenden Seite Lichtanteile ausgekoppelt werden.

Es ist die Aufgabe der Erfindung, eine Leuchte der eingangs beschriebenen Art zur Verfügung zu stellen, welche eine bessere Lichtausbeute besitzt und welche einfacher aufgebaut werden kann.

Erfindungsgemäß wird diese Aufgabe gelöst durch eine Innenraumleuchte nach Anspruch 1.

Erfindungsgemäß wird also das Licht der Lampe nicht mehr ausschließlich an einer Schmalseite eines transparenten Körpers eingestrahlt, sondern zumindest teilweise auf einer der Lichtaustrittsfläche gegenüberliegenden Seite des Körpers. Auf diese Weise läßt sich in einfacher Weise eine Lichtabstrahlung in die Richtung entgegengesetzt zu der Lichtaustrittsfläche erzeugen, die für eine indirekte Beleuchtung verwendet werden kann. Damit umgeht man das Problem der bekannten Leuchten, einen ausreichenden Indirektanteil auskoppeln zu können.

Der lichtdurchlässige oder transparente Körper kann insbesondere auch aus mehreren Teilen bestehen und muß nicht notwendig ein Vollkörper sein. Die Leuchte kann außer der vorangehend genannten Lichtaustrittsfläche auch weitere Lichtaustrittsflächen aufweisen.

Gemäß der Erfindung ist vorgesehen, daß die lichtbrechende Struktur eine Abschirmung des an der Lichtaustrittsfläche austretenden Lichts oberhalb eines Grenzwinkels in mindestens einer Ebene senkrecht zu der Lichtaustrittsfläche erzeugt. Die Erfindung kann vorsehen, daß der Körper eine Grenzfläche zwischen zwei Medien mit unterschiedlichen Brechungsindizes aufweist, die mit einer lichtbrechenden Struktur versehen ist, die entsprechend einem vorzugsweise kreuzungsfreien Linienmuster ausgebildet ist, dessen Linie oder Linien einen oder mehrere längliche lichtbrechende Abschnitte auf einander gegenüberliegenden Seiten begrenzen, derart, daß sich in jedem Schnitt entlang einer (nicht notwendig ebenen) Fläche, die senkrecht auf der oder den Linien des Linienmusters steht, mehrere Schnittpunkte der Fläche mit der oder den Linien ergeben, wobei jeweils zwischen zwei Schnittpunkten einer der besagten Abschnitte liegt. Dabei ist die Breite der lichtbrechenden Abschnitte in der Richtung senkrecht zu den Linien kleiner als deren Länge in Richtung der Linien. Die lichtbrechende Struktur erzeugt, bezogen auf eine Fläche senkrecht zu der oder den Linien, eine Abschirmung des aus der Grenzfläche austretenden Lichts oberhalb eines Grenzwinkels bezüglich einer Normalen zu der Grenzfläche. Vorzugsweise wird dabei in den Flächen parallel zu den Linien im wesentlichen keine Abschirmung oder nur eine Abschirmung bei wesentlich größeren Winkeln erzeugt, so daß die besagte lichtbrechende Struktur im wesentlichen eine Abschirmung des Lichts der Leuchte in einer Richtung bewirkt. Die Abschirmung bewirkt, daß oberhalb des Grenzwinkels die Leuchtdichte unter einen vorgegebenen Grenzwert abfällt, nach der derzeit geltenden deutschen Norm 200 cd/m$^2$. Eine geplante europäische Norm sieht unterschiedliche Grade der Abschirmung vor, die durch Leuchtdichtewerte von 200 cd/m$^2$, 500 cd/m$^2$ und 1000 cd/m$^2$ definiert sind. Durch die Abschirmung kann eine Blendungsbegrenzung erreicht werden, wie sie insbesondere in den derzeit genannten Vorschriften für Bildschirmarbeitsplätze gefordert wird.

Vorzugsweise sind die lichtbrechenden Abschnitte, anders als die bislang, z. B. aus der US-PS 5 396 350 bekannten Prismen, länglich, d. h. ihre Länge ist deutlich größer als ihre Breite, z. B. mehr als das Dreifache, vorzugsweise mehr als das Zehnfache. Derartige längliche, wellen- oder rippenförmige Strukturen lassen sich wesentlich einfacher herstellen als die bislang verwendeten pyramidenförmigen Strukturen. Sie haben weiterhin den Vorteil, daß die lichtbrechenden Abschnitte einen wesentlich größeren Anteil an der Grenzfläche haben, so daß die Auskoppeleffizienz verbessert wird.

Insbesondere kann die lichtbrechende Struktur eine Struktur von lichtbrechenden Abschnitten sein, die entsprechend einem Muster von sich nicht kreuzenden, vorzugsweise parallelen Linien angeordnet sind, welche die lichtbrechenden Abschnitte auf einander gegenüberliegenden Seiten begrenzen. Die Linien, welche die Struktur definieren, sind vorzugsweise parallele gerade Linien. Grundsätzlich sind jedoch auch andere Strukturen denkbar, z.B. eine Struktur, bei der Linien in Form von konzentrischen Kreisen ausgebildet sind oder eine Struktur mit einer einzigen eine Fläche ausfüllenden Linie, z. B. eine Spiralstruktur mit einem spiralförmigen lichtbrechenden Abschnitt.

Gemäß einer bevorzugten Ausführungsform ist vorgesehen, daß der Körper an einer zweiten Grenzfläche zwischen zwei Medien mit unterschiedlichen Brechungsindizes, die in dem Lichtweg von der ersten Grenzfläche zu der besagten Lichtaustrittsfläche liegt, eine zweite lichtbrechende Struktur aufweist, die entsprechend einem Linienmuster, z. B. aus sich nicht kreuzenden, vorzugsweise parallelen Linien angeordnet sind, dessen Linie oder Linien einen oder mehrere längliche lichtbrechende Abschnitte begrenzen, derart, daß sich in jedem Schnitt entlang einer Fläche, die senkrecht auf der oder den Linien des Linienmusters steht, mehrere Schnittpunkte der Fläche mit der oder den Linien ergeben, wobei jeweils zwischen zwei dieser Schnittpunkte einer der besagten Abschnitte liegt. Dabei ist die Breite der lichtbrechenden Abschnitte in der Richtung senkrecht zu den Linien kleiner als deren Länge in Richtung der Linien. Die zweite Struktur erzeugt, bezogen auf eine Fläche senkrecht zu der oder den Linien, eine Abschirmung des aus der zweiten Grenzfläche austretenden Lichts oberhalb eines Grenzwinkels bezüglich einer Normalen zu der zweiten Grenzfläche, während in der Richtung parallel zu den Linien im wesentlichen keine Abschirmung oder nur eine Abschirmung bei wesentlich größeren Winkeln erfolgt. Die Linie oder Linien der zweiten Struktur schneiden in einer Projektion auf die Lichtaustrittsfläche die Linie oder Linien der ersten Struktur, so daß sich in der Projektion ein netzförmiges Muster ergibt, derart, daß das aus der Lichtaustrittsfläche der Leuchte austretende Licht zumindest in zwei nicht parallelen Ebenen senkrecht zu der Lichtaustrittsfläche oberhalb eines Grenzwinkels bezüglich einer Normalen zu der Lichtaustrittsfläche abgeschirmt wird. Vorzugsweise stehen die Linien der ersten und zweiten Struktur in der Projektion senkrecht aufeinander. Die Linien der ersten und/oder zweiten Struktur müssen dabei nicht notwendigerweise gerade sein. Denkbar ist z. B., daß die erste Struktur von konzentrischen Kreisen und die zweite Struktur eine Struktur von Linien ist, die in der Projektion sich im Mittelpunkt der Kreise der anderen Struktur schneiden. Ebenso ist denkbar, daß die erste und zweite Struktur zwei gegenläufige Spiralen bilden.

Vorzugsweise können der oder die lichtlenkenden Abschnitte zwischen linienförmigen Vertiefungen der ersten und/oder zweiten Struktur ausgebildet und in Richtung der Linien im wesentlichen gleichförmig sein und insbesondere Prismen sein. Denkbar ist auch eine Struktur mit einem linsenförmigen Querschnitt senkrecht zu der oder den Linien.

Gemäß einer bevorzugten Ausführungsform ist die erste und/oder zweite Struktur entsprechend einem Muster von geraden parallelen kreuzungsfreien Linien aufgebaut, zwischen denen sich Prismen als lichtbrechende Abschnitte befinden, deren Querschnittsprofil im wesentlichen translationsinvariant bezüglich der Richtung der Linien ist.

Gemäß einer besonderen Ausführungsform ist die erste und/oder zweite Grenzfläche eine Grenzfläche zwischen Luft und einem optisch dichteren Medium, wobei die Prismen im Querschnitt im wesentlichen symmetrisch sind und der Prismenwinkel w die folgenden Relationen erfüllt:

$$w/2 \leq C .$$

$$w \geq 2 \, (2 \, \arcsin(1/n) + 90)/3$$

$$\tan(w/2) \leq (n \, \sin(\arcsin(1/n) - 3 \, w/2) + \cos(w/2)) \, / \, (n \, \cos(\arcsin(1/n) - 3 \, w/2) + \sin(w/2)),$$

wobei n der Brechungsindex des zweiten Mediums an der Grenzfläche und C der Abschirmwinkel der Lichtstärkeverteilung an der Grenzfläche ist.

Der Querschnitt der Prismen hat gemäß einer besonderen Ausführungsform die Form eines Polygonzugs. Vorzugsweise haben die Prismen einen dreieckigen Querschnitt. Sie können jedoch auch gekrümmte Seitenwände und/oder eine flache Stirnfläche anstelle einer scharfen Kante aufweisen. Wichtig ist, daß sie die vorangehend erwähnte Abschirmung in der Richtung quer zu den Linien aufgrund von Lichtbrechung bewirken.

Die Grenzfläche oder Grenzflächen des Körpers mit einer lichtbrechenden Struktur können an einer Außenseite des Körpers, aber auch in seinem Inneren liegen.

Erfindungsgemäß können die erste und zweite Struktur an zwei einander gegenüberliegenden Seiten einer lichtbrechenden Platte ausgebildet sein, welche dabei vorzugsweise den besagten Körper bildet.

Gemäß einer bevorzugten Ausführungsform der Erfindung ist vorgesehen, daß der Körper zwei oder mehrere geschichtete plattenförmige Elemente aufweist, deren Grundflächen parallel zueinander angeordnet sind, wobei die erste Struktur in einer Grundfläche eines ersten plattenförmigen Elementes und die zweite Struktur in einer Grundfläche des zweiten plattenförmigen Elementes ausgebildet ist.

Die beiden Grundflächen mit der ersten bzw. zweiten Struktur können direkt aneinander angrenzen. In diesem Fall bilden die Platten eine Einheit mit den beiden strukturierten Grundflächen in der Mitte, also im Inneren des Körpers, und vorzugsweise unstrukturierten, also im wesentlichen glatten Grundflächen auf der Außenseite. Die strukturierten Grundflächen können auch jeweils nach außen weisen, so daß die Platten mit den unstrukturierten Flächen aneinander angrenzen. Schließlich ist es auch möglich, daß die beiden strukturierten Grenzflächen beide in dieselbe Richtung weisen, entweder in die Richtung des Lichtaustritts aus dem besagten Körper oder in die entgegengesetzte Richtung.

Die Erfindung sicht vor, daß eine Lampe, welche Licht auf die erste Außenseite des Körpers einstrahlt, oder ein Reflektor, welcher Licht einer Lampe zu der ersten Außenseite des Körpers reflektiert, seitlich von dem Körper und versetzt zu der ersten Seite des Körpers angeordnet ist.

Die Erfindung kann einen einer oder mehreren Lampen zugeordneten Reflektor vorsehen, welcher Licht der Lampe bzw. der Lampen teilweise zu der ersten Außenseite des Körpers reflektiert und teilweise von dem Körper weg nach oben zur Erzeugung eines indirekten Lichtanteils der Leuchte abgibt. Dies entspricht im wesentlichen der in der EP 0 846 915 A1 vorgeschlagenen Technik zur Erzeugung eines indirekten Lichtanteils.

Die Erfindung sicht vor, daß der ersten Außenseite des Körpers eine Dachfläche gegenübersteht, welche von dem Körper reflektiertes Licht auf diesen zurückreflektiert. Es ist vorgesehen, daß sie von dem Körper reflektiertes Licht teilweise zu dem Körper zurückreflektiert und teilweise in eine Richtung weg von dem Körper lenkt oder in eine Richtung weg von dem Körper durchläßt. Die Dachfläche wird ganz oder teilweise als Lochblech ausgebildet, insbesondere wie in der CH 670 493 A5 beschrieben.

Hierfür kann die Dachfläche teilweise transparent und teilweise reflektierend ausgebildet sein. Um die indirekte Lichtabgabe zu kontrollieren und insbesondere einen ausreichenden direkten Lichtanteil zu erhalten, kann auch vorgesehen sein, daß die Dachfläche abschnittsweise teilweise transparent und abschnittsweise im wesentlichen vollständig reflektierend ist.

Eine teilweise Transparenz kann beispielsweise dadurch realisiert werden, daß die Dachfläche teilweise als halbdurchlässiger Spiegel ausgebildet ist.

Ebenfalls kann vorgesehen sein, daß die Dachfläche eine lichtbrechende Struktur zum Auskoppeln von Licht in die der Lichtaustrittsfläche entgegengesetzte Richtung aufweist. Diese lichtbrechende Struktur kann eine Prismenstruktur sein, wie sie aus der US-PS 5 396 350 oder der US 5 555 109 bekannt ist, oder auch eine Struktur, wie sie zum Lichtauskoppeln an der Lichtaustrittsfläche an der Unterseite des Lichtleiters vorgesehen ist.

Eine weitere Möglichkeit zur Lichtauskoppelung an der Dachfläche für eine diffuse Beleuchtung, beispielsweise einer Decke, kann auch darin bestehen, daß die Dachfläche durch eine entsprechende Strukturierung, z.B. Aufrauhen oder dgl., transparent streuend ausgebildet wird.

Alternativ oder ergänzend kann vorgesehen sein, daß die Dachfläche teilweise aus einem klaren Material mit einem hohen Transmissionsgrad besteht und/oder teilweise aus einem vollständig oder überwiegend reflektierenden Material besteht.

Insbesondere kann vorgesehen sein, daß in der Dachfläche im wesentlichen ausschließlich transmittierende und im wesentlichen ausschließlich reflektierende Abschnitte vorgesehen sind.

Es hat sich gezeigt, daß die Lichtstärke des über die Lichtaustrittsfläche abgestrahlten Lichts für kleine Winkel zur Senkrechten vergrößert wird, wenn die Dachfläche abschnittsweise diffus reflektierend ausgebildet ist.

Die erfindungsgemäße Leuchte weist einen Hohllichtleiter auf, der durch ein Gehäuse mit einem Hohlraum festgelegt ist, dessen Innenwände zumindest teilweise reflektierend sind, der an einer Schmalseite zum Einkoppeln von Licht von einer oder mehreren der Lampen eingerichtet ist, der an einer Seite zumindest teilweise durch die erste Außenseite des besagten transparenten Körpers begrenzt ist und der eine der Lichtauskoppeleinrichtung gegenüberliegende Dachfläche aufweist, die nach innen, also zu dem Hohlraum hin, zumindest teilweise reflektierend ist. Es müssen nicht alle Innenwände reflektierend sein. Es kann vorgesehen sein, daß sie teilweise Licht durchlassen oder nur abschnittsweise reflektieren.

Der Hohlraum kann zu der Lampe hin geschlossen sein und eine Lichteinkoppeleinrichtung zum Einkoppeln von Licht von der Lampe in den Hohlraum aufweisen, im einfachsten Fall eine transparente Wand.

Gemäß einer bevorzugten Ausführungsform ist jedoch vorgesehen, daß der Hohllichtleiter zu der oder den Lampen hin offen ist, so daß Licht von den Lampen direkt in den Hohlraum gelangen kann.

Die Verwendung eines Hohllichtleiters führt zu einem größeren Anteil des direkt abgestrahlten Lichts. Dieser Anteil kann insbesondere durch eine Verspiegelung der Dachfläche oder durch eine diffus reflektierende Dachfläche erhöht werden. Die Auskopplung von Licht läßt sich in einfacher Weise dadurch realisieren, daß als Boden des Hohlraums ein oder mehrere entsprechend strukturierte Platten eingesetzt werden. Obwohl derzeit zwei derartige Platten bevorzugt sind, können durchaus auch mehr derartige Platten mit unterschiedlichen Strukturen vorgesehen werden, um die Lichtabstrahlcharakteristik zu beeinflussen, insbesondere um den Abstrahlwinkel in verschiedenen Ebenen zu begrenzen. Wenn eine Abschirmung nur in eine Richtung beabsichtigt ist, kann auch nur eine einzige Platte mit einer entsprechenden Strukturierung verwendet werden.

Weitere Merkmale und Vorteile der Erfindung ergeben sich aus der nachfolgenden Beschreibung von Ausführungsbeispielen der Erfindung anhand der beigefügten Zeichnungen.

Fig. 1    zeigt schematisch ein erstes Ausführungsbeispiel einer Innenraumleuchte mit einzelnen Merkmalen der Erfindung,

Fig. 2    zeigt einen Querschnitt der Leuchte gemäß Fig. 1 senkrecht zu der Lampenachse und illustriert den Strahlengang in dem Hohllichtleiter,

Fig. 3    zeigt eine perspektivische Ansicht der beiden rillenförmig strukturierten Prismenplatten zum Auskoppeln von Licht aus dem Lichtleiter,

Fig. 4    ist eine Schnittansicht der Prismenplatten gemäß Fig. 3 entlang der Linie IV - IV,

Fig. 5    ist eine Schnittansicht der beiden Prismenplatten gemäß Fig. 3 entlang der Linie V-V,

Fig. 6    zeigt schematisch ein Ausführungsbeispiel der erfindungsgemäßen Leuchte,

Fig. 7    zeigt schematisch einen Querschnitt eines Hohllichtleiters in einer Leuchte mit einer refraktiven Lichtauskoppeleinrichtung für den Indirektanteil,

Fig. 8    zeigt eine weitere Ausführungsform einer Leuchte mit einzelnen Merkmalen der Erfindung,

Fig. 9    zeigt eine abgewandelte Ausführungsform des Hohllichtleiters der Leuchte gemäß Fig. 6 oder 7,

Fig. 10    zeigt ein Beispiel einer Leuchte in einem schematischen Querschnitt.

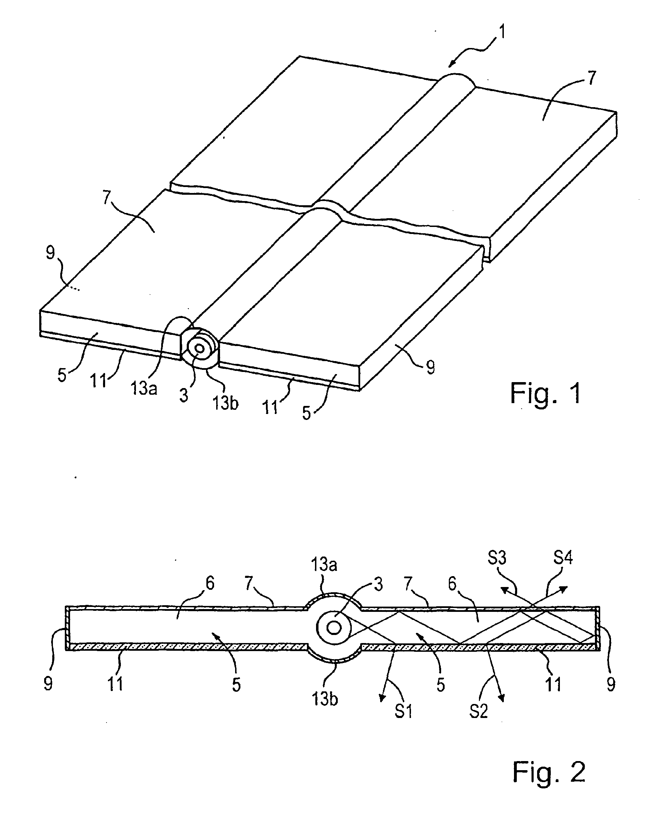

Fig. 1 zeigt ein erstes Ausführungsbeispiel einer Leuchte, die allgemein mit 1 bezeichnet ist. Bei dieser Leuchte 1 ist eine Leuchtstofflampe 3 in der Mitte zwischen zwei Hohllichtleitern 5 mit einem Hohlraum 6 angeordnet, der, wie aus Fig. 2 ersichtlich, auf der der Lampe 3 zugewandten Schmalseite offen ist. Der Hohlraum 6 wird oben durch eine teilweise reflektierende Dachfläche 7, seitlich durch reflektierende Seitenwände 9 und unten durch eine eine Lichtauskoppeleinrichtung 11 bildenden Lichtlenkkörper begrenzt, der nachfolgend näher beschriebene lichtbrechende Strukturen zum Auskoppeln von Licht aus dem Hohllichtleiter 5 aufweist. Die Lampe 3 ist oben und unten von einem Reflektor 13a bzw. 13b umgeben, welcher vorzugsweise so ausgestaltet ist, daß das Licht der Lampe 3 nahezu vollständig in die beiden Hohllichtleiter 5 eingekoppelt wird.

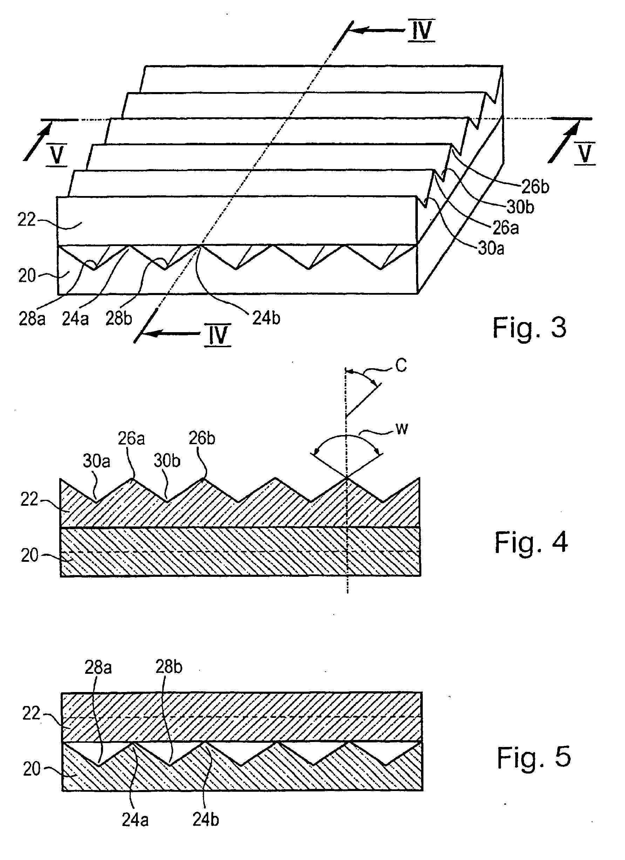

Die Lichtauskoppeleinrichtung 11 ist in den Figuren 3 bis 5 perspektivisch bzw. im Schnitt näher dargestellt. Sie besteht aus zwei Platten 20 und 22, die jeweils an der der Seite des Lichteinfalls gegenüberliegenden Seite eine Mikroprismenstruktur mit satteldachförmigen Mikroprismen 24a, 24b ... bzw. 26a, 26b, ... (nachfolgend kollektiv mit 24 bzw. 26 bezeichnet) versehen sind, die durch gerade rinnenförmige Vertiefungen 28a, 28b ... bzw. 30a, 30b, ... (nachfolgend kollektiv mit 28 bzw. 30 bezeichnet) voneinander getrennt sind. Dabei stehen die Kantenlinien der Prismen 24 bzw. die Vertiefungen 28 senkrecht zu den Kantenlinien der Prismen 26 bzw. den Vertiefungen 30. Der besseren Anschaulichkeit halber sind die Prismenplatten in Fig. 3 bis 5 so dargestellt, daß die Prismen, die im Einsatz nach außen, also zur Lichtaustrittsseite hin, liegen, nach oben gerichtet dargestellt ist. Die Breite der Prismen liegt gemäß den derzeit bevorzugten Ausführungsformen zwischen ca 0,01 mm bis 40 mm, bevorzugt 0,05 mm bis 10 mm und besonders bevorzugt 0,1 mm bis 5 mm. Die Platten 20 und 22 bestehen aus einem leicht bearbeitbaren lichtdurchlässigen Material, z.B. Acrylglas oder Polycarbonat.

Die Prismenstrukturen der Platten 20 bzw. 22 legen jeweils einen Abschirmwinkel der Leuchte in der Ebene senkrecht zu den Kantenlinien der Prismen 24 bzw. 26 bzw. den Vertiefungen dazwischen fest. Dabei bestehen zwischen dem Prismenwinkel w und dem Abschirmwinkel C in der Ebene senkrecht zu den Kantenlinien der Mikroprismen (vgl. Fig. 4), wenn der Hohlraum 6 mit Luft gefüllt ist, die folgenden Relationen:

$$w/2 \leq C$$

$$w \geq 2\,(2\,\arcsin(1/n) + 90)/3$$

$$\tan(w/2) \leq (n\,\sin(\arcsin(1/n) - 3\,w/2) + \cos(w/2)) \,/\, (n\,\cos(\arcsin(1/n) - 3\,w/2) + \sin(w/2)),$$

wobei n der Brechungsindex der Platte 20 bzw. 22 ist. Aufgrund der senkrecht zueinanderstehenden Prismenstrukturen ergibt sich eine Entblendung sowohl in Längs- als auch in Querrichtung, wobei der Abschirmwinkel C für die beiden Richtungen durch eine geeignete Wahl des Prismenwinkels w unterschiedlich für die beiden Prismenstrukturen 24 und 26 gewählt werden kann.

Anstelle von orthogonalen rillenförmigen Prismenstrukturen sind auch andere linienförmige Prismenstrukturen mit orthogonal aufeinanderstehenden Linien denkbar, z.B. kreisförmige Rillen bzw. Prismen in einer Struktur und sternförmig von dem Kreiszentrum ausgehenden Rillen mit dazwischenliegenden Prismen in der anderen Struktur, die auf allen Kreisrillen senkrecht stehen. Die Orientierung der Prismenstrukturen 24 und 26 kann von der in den Figuren 3 bis 5 dargestellten Orientierung abweichen. Beide Prismenstrukturen können beispielsweise in die gleiche Richtung weisen, so daß eine der Prismenstrukturen an der ebenen Fläche der anderen Platte aufsteht oder die Prismenstrukturen können auch direkt aneinander angrenzen.

Die Wirkungsweise des Hohllichtleiters ist in Fig. 2 anhand beispielhafter Strahlengänge illustriert. Für einen Teil der Lichtstrahlen (vgl. Lichtstrahl S1) wird das direkt auf die Lichtauskoppeleinrichtung 11 einfallende Licht über die Prismen 24 und 26 direkt ausgekoppelt. Für einen weiteren Teil des Lichts (vgl. Strahl S2) wird das Licht an der Prismenstruktur in den Hohlraum 6 hinein zurückreflektiert, anschließend an der Dachfläche 7 und der Seitenwand 9 reflektiert und gelangt dann wieder mit einem geeigneten Einfallswinkel zu der Lichtauskoppeleinrichtung 11, wo es durch die Prismenstrukturen 24 und 26 ausgekoppelt wird. Die Dachfläche 7 ist nicht vollständig reflektierend ausgebildet, sondern vielmehr teilweise transparent, so daß ein Teil des in dem Hohllichtleiter 5 umlaufenden Lichts an der Dachfläche ausgekoppelt wird, was durch Teillichtstrahlen S3 und S4 angedeutet ist. Die Dachfläche 7 kann diffus streuend ausgebildet sein, sie kann aber auch eine Lichtauskoppeleinrichtung ähnlich der Lichtauskoppeleinrichtung 11 aufweisen. Es kann auch vorgesehen sein, daß sie abschnittsweise vollständig reflektierend und abschnittsweise teilweise oder vollständig transparent ist. Sie kann insbesondere auch teilweise hochglänzend ausgebildet sein. Die geeignete Wahl der Dachfläche 7 hängt davon ab, welche Lichtstärkeverteilung man für den Indirektanteil wünscht. Für eine möglichst wenig variierende Lichtstärkeverteilung des indirekt abgestrahlten Lichts ist eine diffus oder teilweise diffus streuende Dachfläche sinnvoll, während dann, wenn eine bestimmte Vorzugsrichtung für den Indirektanteil gewünscht ist, eine lichtbrechende lichtlenkende Struktur, beispielsweise eine Prismenstruktur, vorteilhaft ist, da sich dadurch die Lichtstärkeverteilungskurve gezielt beeinflussen läßt.

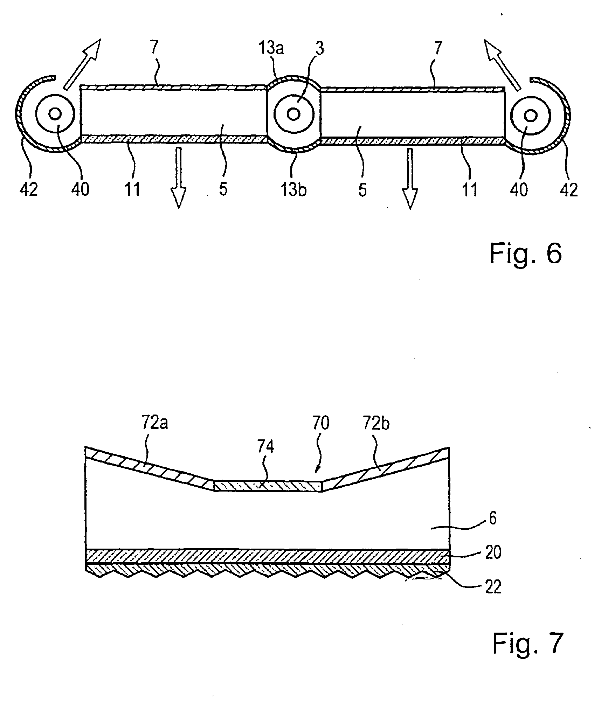

Eine Ausführungsform der Erfindung mit mehreren Lampen ist schematisch in Fig. 6 dargestellt. Dort ist an den beiden äußeren Schmalseiten der Lichtleiter 5 jeweils eine weitere Leuchtstofflampe 40 angeordnet, welche von außen Licht in den Hohllichtleiter 5 einkoppelt. Wie vorangehend mit Bezug auf Fig. 4 beschrieben, koppeln die beiden Lichtauskoppeleinrichtungen 11 einen Teil des Lichts der Lampen 3 und 40 direkt aus und reflektieren einen weiteren Teil des Lichts zu der Dachfläche 7, wo er wiederum teilweise als indirekter Lichtanteil nach oben austritt und teilweise in den Hohlraum 6 zurückreflektiert wird. Die Lampen 40 sind von Reflektoren 42 zum Einkoppeln von Licht in die Hohllichtleiter 5 umgeben. Gleichzeitig sind diese Reflektoren 42 jedoch auch so ausgebildet, daß ein Teil des Lichts der Lampen 40 nach oben schräg an dem Hohllichtleiter 5 vorbei als Indirektanteil abgestrahlt wird. Dies wird durch eine teilweise Ausbildung der Reflektoren 42 als Lochbleche realisiert.

Fig. 7 zeigt schematisch im Querschnitt einen modifizierten Hohllichtleiter, bei dem an zwei einander gegenüberliegenden Schmalseiten jeweils von einer Lampe Licht in den Hohlraum 6 eingekoppelt wird, beispielsweise wie in Fig. 6 dargestellt. Der Hohlraum 6 wird auf der Unterseite wieder durch die Lichtauskoppeleinrichtung mit den Prismenplatten 20 und 22 und auf der Oberseite durch eine Dachfläche 70 begrenzt. Die Dachfläche 70 weist zwei nach innen geneigte vollständig reflektierende Dachabschnitte 72a und 72b auf, zwischen denen sich ein ebener Abschnitt 74 erstreckt. In dem ebenen Abschnitt 74 ist eine Prismenstruktur zum Auskoppeln von Licht aus dem Hohlraum 6 ausgebildet, um einen Teil des Lichts in dem Hohlraum 6 als indirekten Lichtanteil auszukoppeln. Dieses Beispiel illustriert auch, wie man den Indirektanteil, der aus dem Hohlraum 6 ausgekoppelt wird, dadurch kontrollieren kann, daß man Abschnitte mit unterschiedlichen Reflexions- bzw. Transmissionseigenschaften vorsieht.

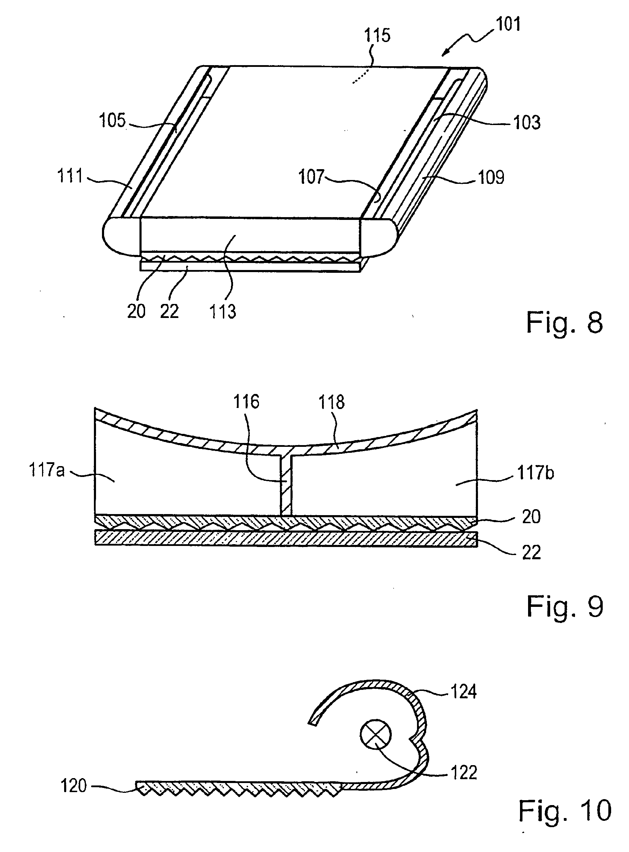

Fig. 8 zeigt eine Abwandlung der Ausführungsform der Fig. 6, bei der ebenfalls in einen Hohllichtleiter von zwei Schmalseiten aus Licht eingekoppelt wird. Anders als bei den vorangehend beschriebenen Ausführungsformen ist dabei nur ein einziger Hohllichtleiter 101 mit Prismenplatten 20 und 22 an seiner Unterseite vorgesehen, an dessen beiden Schmalseiten jeweils eine Leuchtstofflampe 103 bzw. 105 angeordnet ist, die Licht in den Hohlraum 107 einstrahlen.

Den Lampen 103 und 105 sind Reflektoren 109 und 111 zugeordnet, die das auf sie einfallende Licht, wie bei der Ausführungsform nach Fig. 6, teilweise in den Hohlraum 107 hinein und teilweise über den Hohllichtleiter 101 hinweg nach oben reflektieren. Als Abwandlung dieser Ausführungsform kann eine der beiden Lampen entfallen und durch eine in den Hohlraum 107 reflektierende Abschlußwand des Hohllichtleiters 101 ersetzt werden. Alternativ oder ergänzend kann auch an der Frontseite 113 und/oder an der Rückseite 115 des Hohllichtleiters 115 eine weitere Lampe zum Einkoppeln von Licht in den Hohlraum 107 vorgesehen sein.

Fig. 9 zeigt eine abgewandelte Ausführungsform eines Hohllichtleiters, der bei Ausführungsformen der erfindungsgemäßen Leuchten mit zweiseitiger Lichteinstrahlung, wie sie beispielsweise bei den Ausführungsformen gemäß Fig. 6 und 7 vorgesehen sind, verwendet werden kann. Bei dieser Ausführungsform weist der Hohllichtleiter etwa in der Mitte eine nach beiden Seiten reflektierende Trennwand 116 auf, so daß der Hohlraum des Hohllichtleiters in zwei Kammern 117a und 117b unterteilt wird. In jede dieser beiden Kammern 117a und 117b wird von einer Lampe, beispielsweise den beiden Lampen 103 und 105 gemäß dem Ausführungsbeispiel der Fig. 8, Licht eingestrahlt. Nach oben ist der Hohllichtleiter durch eine teilweise lichtdurchlässige Dachfläche 118 abgeschlossen, die in Fig. 9 konkav nach innen gewölbt dargestellt ist. Selbstverständlich können auch anderen Formen der Dachfläche in geeigneter Weise verwendet werden.

Fig. 10 zeigt ein Beispiel einer Leuchte ohne einen Hohllichtleiter. Bei dem Beispiel der Fig. 10 ist seitlich neben einer Prismenplatte 120, die wie vorangehend mit Bezug auf Fig. 3 bis 5 beschrieben ausgebildet ist, eine Lampe 122 gegenüber der oberen Grundfläche der Prismenplatte 120 nach oben versetzt angeordnet, welche Licht auf die Platte 120 einstrahlt. Ein Reflektor 124, der an den beiden Stirnseiten durch eine Kappe (nicht dargestellt) abgeschlossen ist, lenkt das auf ihn von der Lampe 122 einfallende Licht zu der Platte 120. Er kann gleichzeitig als Abschirmung für das von der Lampe 122 direkt abgestrahlte Licht dienen und verhindern, daß Licht über das Ende der Platte 120 hinaus direkt abgestrahlt wird. Vorzugsweise ist der Reflektor, wie in Fig. 10 angedeutet, in einer Evolventenform ausgebildet, die verhindert, daß Licht auf die Lampe 122 zurückreflektiert wird. Das auf die Platte 120 einfallende Licht wird teilweise durchgelassen und teilweise reflektiert, wobei das reflektierte Licht ungehindert nach oben abstrahlt und den Indirektanteil der Leuchte bildet. Die Prismenplatte 120 bewirkt eine Abschirmung des nach unten abgestrahlten Lichts bezüglich der Zeichenebene.

Selbstverständlich kann die Leuchte gemäß Fig. 10 auch für eine Abschirmung in zwei Ebenen eingerichtet werden, wobei dann, wie bei den vorangehend beschriebenen Ausführungsformen, zwei Prismenplatten mit senkrecht zueinander stehenden Prismen verwendet werden und das direkt von der Lampe 122 abgestrahlte Licht entweder so gelenkt wird, daß es ausschließlich auf die Prismenplatte 120 einfällt, oder mit herkömmlichen Mitteln, z.B. Blenden, in geeigneter Weise abgeschirmt wird. Ebenso können die mit Bezug auf Fig. 1 bis 8 beschriebenen Ausführungsformen auch nur mit einer einzigen Prismenplatte realisiert werden.

Die in der vorangehenden Beschreibung, den Ansprüchen und den Zeichnungen offenbarten Merkmale der Erfindung können sowohl einzeln als auch in beliebiger Kombination für die Verwirklichung der Erfindung in ihren verschiedenen Ausführungsformen wesentlich sein.

**Bezugszeichenliste**

| | |
|---|---|
| 1 | Leuchte |
| 3 | Lampe |
| 5 | Hohllichtleiter |
| 6 | Hohlraum |
| 7 | Dachfläche |
| 9 | Seitenwand |
| 11 | Lichtauskoppeleinrichtung |
| 13a, 13b | Reflektor |
| 20 | Platte |
| 22 | Platte |
| 24, 24a, 24b | Prismen |
| 26, 26a, 26b | Prismen |
| 28, 28a, 28b | Vertiefung |
| 30, 30a, 30b | Vertiefung |
| 40 | Lampe |
| 42 | Reflektor |
| 70 | Dachfläche |
| 72a, 72b | geneigte Dachabschnitte |

| 74 | Prismenstruktur |
| 101 | Hohllichtleiter |
| 103 | Lampe |
| 105 | Lampe |
| 107 | Hohlraum |
| 109 | Reflektor |
| 111 | Reflektor |
| 113 | Frontseite |
| 115 | Rückseite |
| 116 | Trennwand |
| 117a, 117b | Kammer |
| 118 | Dachfläche |
| 120 | Prismenplatte |
| 122 | Lampe |
| 124 | Reflektor |

**Patentansprüche**

1. Innenraumleuchte zum Abhängen von einer Decke oder dergleichen mit einer oder mehreren Lampen (3; 40, 103, 105; 122) und einem von einer Lampe beabstandeten, zumindest teilweise lichtdurchlässigen ein- oder mehrteiligen Körper (11; 120) mit einer ersten Außenseite, auf welche die Lampe (3; 40, 103, 105; 122) direkt oder indirekt Licht einstrahlt, und einer der ersten Außenseite gegenüberliegenden zweiten Außenseite, welche eine Lichtaustrittsfläche der Leuchte bildet, wobei mindestens eine Grenzfläche des Körpers zwischen zwei Medien mit unterschiedlichem Brechungsindex mit einer lichtbrechenden Struktur (26, 28) versehen ist, wobei die Lampe (3; 40, 103, 105; 122) relativ zu dem Körper (11; 120) so angeordnet und der Körper (11; 120) so gestaltet ist, daß ein Teil des auf den Körper an der ersten Außenseite einfallenden Lichts der Lampe durchgelassen wird und an der der ersten Außenseite gegenüberliegenden Lichtaustrittsfläche nach unten austritt und ein weiterer Teil des auf den Körper an der ersten Außenseite einfallenden Lichts der Lampe an oder in dem Körper reflektiert wird und zumindest teilweise in eine Richtung weg von dem Körper nach oben zur indirekten Beleuchtung von der Leuchte abgestrahlt wird, wobei eine Lampe (3; 40; 103, 105; 122), welche Licht auf die erste Außenseite des Körpers (11; 120) einstrahlt, oder ein Reflektor (124), welcher Licht einer Lampe zu der ersten Außenseite des Körpers reflektiert, seitlich von dem Körper und zu der ersten Außenseite des Körpers in einer Richtung senkrecht zu dieser Seite versetzt angeordnet ist, wobei die lichtbrechende Struktur eine Abschirmung des an der Lichtaustrittsfläche austretenden Lichts oberhalb eines Grenzwinkels in mindestens einer Ebene senkrecht zu der Lichtaustrittsfläche erzeugt derart, dass oberhalb des Grenzwinkels die Leuchtdichte unter einen vorgegebenen Grenzwert abfällt, wobei die Leuchte zumindest einen Hohllichtleiter (5; 101) aufweist, der durch ein Gehäuse mit einem Hohlraum (6) festgelegt ist, in den an mindestens einer Seite Licht von einer oder mehreren der Lampen eingekoppelt wird, dessen Innenwände (7, 9) zumindest zum Teil reflektierend sind, der an einer Seite, die von der oder den besagten Seiten zum Einkoppeln von Licht verschieden ist, zumindest teilweise durch die erste Außenseite des besagten Körpers begrenzt ist und der eine dem Körper (11; 120) gegenüberliegende Dachfläche (7) aufweist, die nach innen hin zumindest teilweise reflektierend ist, und die Dachfläche (7) ganz oder teilweise als Lochblech ausgebildet ist.

2. Leuchte nach Anspruch 1, **dadurch gekennzeichnet, daß** die Grenzfläche mit einer lichtbrechenden Struktur versehen ist, die zumindest abschnittsweise entsprechend einem Linienmuster (28, 30) aus einer oder mehreren Linien ausgebildet ist, dessen Linie oder Linien (28, 30) einen oder mehrere längliche lichtbrechende Abschnitte (24a, 24b; 26a, 26b) auf einander gegenüberliegenden Seiten begrenzen, deren Breite in der Richtung senkrecht zu den Linien kleiner als deren Länge in Richtung der Linien ist, wobei die lichtbrechende Struktur, bezogen auf eine Fläche senkrecht zu der oder den Linien, eine Abschirmung des aus der Grenzfläche austretenden Lichts oberhalb eines Grenzwinkels bezüglich einer Normalen zu der Grenzfläche erzeugt.

3. Leuchte nach Anspruch 2, **dadurch gekennzeichnet, daß** der Körper an einer zweiten Grenzfläche zwischen zwei Medien mit unterschiedlichen Brechungsindizes, die in dem Lichtweg des aus der Lichtaustrittsfläche austretenden Lichts nach der ersten Grenzfläche liegt, eine zweite lichtbrechende Struktur aufweist, die zumindest abschnittsweise entsprechend einem Linienmuster aus einer oder mehreren Linien ausgebildet ist, dessen Linie oder Linien (30) einen oder mehrere längliche lichtbrechende Abschnitte (26a, 26b) auf einander gegenüberliegenden Seiten begrenzen, deren Breite in der Richtung senkrecht zu den Linien kleiner als deren Länge in Richtung der Linien ist, wobei die zweite Struktur, bezogen auf eine Fläche senkrecht zu der oder den Linien, eine Abschirmung des aus der zweiten Grenzfläche austretenden Lichts oberhalb eines Grenzwinkels bezüglich einer Normalen zu der zweiten Grenzfläche erzeugt, wobei die Linien der zweiten Struktur relativ zu den Linien der ersten Struktur so angeordnet sind, daß das aus der Lichtaustrittsfläche austretende Licht zumindest in zwei nicht parallelen Ebenen senkrecht zu der Lichtaustrittsfläche oberhalb eines Grenzwinkels bezüglich einer Normalen zu der Lichtaustrittsfläche abgeschirmt wird.

4. Leuchte nach Anspruch 2 oder 3, **dadurch gekennzeichnet, daß** die erste und/oder zweite Struktur entsprechend einem Muster von geraden parallelen kreuzungsfreien Linien (28a, 28b, 30a, 30b) aufgebaut ist, zwischen denen sich Prismen (24a, 24b, 26a, 26b) als lichtbrechende Abschnitte befinden, deren Querschnittsprofil im wesentlichen translationsinvariant bezüglich der Richtung der Linien ist.

5. Leuchte nach Anspruch 3 oder 4, **dadurch gekennzeichnet, daß** der Körper mehrere geschichtete plattenförmige Elemente (20, 22) aufweist, deren Grundflächen parallel zueinander angeordnet sind, wobei die erste Struktur in einer Grundfläche eines ersten plattenförmigen Elements und die zweite Struktur in einer Grundfläche eines zweiten plattenförmigen Elements ausgebildet ist.

6. Leuchte nach einem der Ansprüche 1 bis 5, **gekennzeichnet durch** einen einer oder mehreren Lampen zugeordneten Reflektor (42), welcher Licht der Lampe bzw. der Lampen teilweise zu der ersten Außenseite des Körpers (11; 120) reflektiert und teilweise von dem Körper weg nach oben zur Erzeugung eines indirekten Lichtanteils der Leuchte abgibt.

7. Leuchte nach einem der vorhergehenden Ansprüche, **dadurch gekennzeichnet, daß** die Dachfläche (7) teilweise als halbdurchlässiger Spiegel ausgebildet ist.

8. Leuchte nach einem der vorhergehenden Ansprüche, **dadurch gekennzeichnet, daß** die Dachfläche eine lichtbrechende Struktur (74) zum Auskoppeln von Licht in die der besagten Lichtaustrittsfläche entgegengesetzte Richtung aufweist.

9. Leuchte nach einem der vorhergehenden Ansprüche, **dadurch gekennzeichnet, daß** die Dachfläche (7) abschnittsweise aus einem klaren Material besteht.

10. Leuchte nach einem der vorhergehenden Ansprüche, **dadurch gekennzeichnet, daß** die Dachfläche (7) abschnittsweise aus einem vollständig oder überwiegend reflektierenden Material besteht.

11. Leuchte nach einem der vorhergehenden Ansprüche, **dadurch gekennzeichnet, daß** die Dachfläche (7) abschnittsweise diffus reflektierend ausgebildet ist.

**Claims**

1. Interior luminaire to be suspended from a ceiling or the like, having one or more lamps (3; 40, 103, 105; 122) and an at least partially translucent single-piece or multi-piece body (11; 120) which is separated from a lamp and has a first outer face, onto which the lamp (3; 40, 103, 105; 122) radiates light directly or indirectly, and has a second outer face, which lies opposite the first outer face and forms a light outlet surface of the luminaire, wherein at least one boundary surface of the body between two media with differing refractive indices is provided with a light-refractive structure (26, 28), wherein the lamp (3; 40, 103, 105; 122) is arranged in relation to the body (11; 120) and the body (11; 120) is fashioned such that part of the light from the lamp incident on the first outer face of the body is allowed through and emerges downwards at the light outlet surface opposite the first outer face, and another part of the light from the lamp incident on the first outer face of the body is reflected on or in the body and is emitted upwards from the luminaire at least partially in a direction away from the body for indirect illumination, with a lamp (3; 40; 103, 105; 122), which radiates light onto the first outerface of the body (11; 120), or a reflector (124), which reflects light from a lamp to the first outer face of the body, being arranged at the side of the body and offset with respect to the first outer face of the body in a direction at right angles to this face wherein the light-refracting structure screens the light emerging from at the light outlet surface above a critical angle on at least one plane at right angles to the light outlet surface, such that the brightness above the critical angle decrease below a predetermined limit, wherein the luminaire has at least one optical waveguide (5; 101) which is defined by a housing having a cavity (6) into which light from one or more of the lamps is coupled at at least one face, whose internal walls (7, 9) are at least partially reflective, which is delimited at one face, which is different from said face or faces for coupling in light, at least partially by the first outer face of the body and which has a roof surface (7) which lies opposite the body (11; 120) and is at least partially inwardly reflective, and the roof surface (7) is entirely or partially in the form of a perforated metal sheet.

2. Luminaire according to Claim 1, **characterized in that** the boundary surface is provided with a light-refracting structure, which is fashioned at least in places according to a line pattern (28, 30) comprising one or more lines, whose line or lines (28, 30) delimit one or more elongate light-refracting sections (24a, 24b; 26a, 26b) on mutually opposite faces, whose width in the direction at right angles to the lines is less than their length in the direction of the lines, with the light-refracting structure, based on a surface at right angles to the line or the lines, screening the light emerging from the boundary surface above a critical angle with respect to a normal to the boundary surface.

3. Luminaire according to Claim 2, **characterized in that** the body has a second light-refracting structure, which is fashioned at least in sections according to a line pattern comprising one or more lines, whose line or lines (30) delimit one or more elongate light-refracting sections (26a, 26b) on mutually opposite faces, whose width in the direction at right angles to the lines is less than their length in the direction of the lines, at a second boundary surface between two media with differing refractive indices, which lies in the optical path of the light emerging from the light outlet surface downstream of the first bounday surface, with the second structure, based on a surface at right angles to the line or the lines, screening of the light emerging from the second bounday surface above a critical angle with respect to a normal to the second bounday surface, with the lines of the second structure being arranged in relation to the lines of the first structure such that the light emerging from the light outlet surface is screened at least on two non-parallel planes at right angles to the light outlet surface above a critical angle with respect to a normal to the light outlet surface.

4. Luminaire according to Claim 2 or 3, **characterized in that** the first and/or second structure is designed according to a pattern of straight parallel lines (28a, 28b, 30a, 30b) free of intersections, between which prisms (24a, 24b, 26a, 26b) are located as light-refracting sections whose cross-sectional profile is substantially translation-invariant with respect to the direction of the lines.

5. Luminaire according to Claim 3 or 4, **characterized in that** the body has a plurality of layered elements (20, 22) in the form of plates whose base surfaces are arranged parallel to each other, with the first structure being formed in a base surface of a first element in the form of plates and the second structure being formed in a base surface of a second element in the form of plates.

6. Luminaire according to one of Claims 1 to 5, **characterized by** a reflector (42), which is associated with one or more lamps, partially reflects light from the lamp or lamps to the first outer face of the body (11; 120) and partially emits it upwards away from the body in order to produce an indirect light component of the luminaire.

7. Luminaire according to one of the previous Claims, **characterized in that** the roof surface (7) is entirely or partially in the form of a semi-reflective mirror.

8. Luminaire according to one of the previous Claims, **characterized in that** the roof surface has a light-refractive structure (74) for emitting light in the direction which runs opposite said light outlet surface.

9. Luminaire according to one of the previous Claims, **characterized in that** the roof surface (7) is composed in sections of a clear material in places.

10. Luminaire according to one of the previous Claims, **characterized in that** the roof surface (7) is composed of an entirely or predominantly reflective material in places.

11. Luminaire according to one of the previous Claims, **characterized in that** the roof surface (7) is fashioned such that it is entirely reflective, or if diffusely reflective in places.

**Revendications**

1. Luminaire intérieur à décrocher d'un plafond ou analogue avec une ou plusieurs lampes (3; 40, 103, 105; 122) et un corps (11; 120) en une ou plusieurs partie(s) au moins partiellement translucide distant d'une lampe avec un premier côté extérieur, sur lequel la lampe (3; 40, 103, 105; 122) irradie une lumière directe ou indirecte et un second côté extérieur opposé au premier côté extérieur qui forme une surface de sortie lumineuse de luminaire, sachant qu'au moins une interface du corps est prévue entre deux milieux d'indices de réfraction différents avec une structure réfractive (26, 28), la lampe (3; 40, 103, 105; 122) étant ainsi disposée par rapport au corps (11; 120) et le corps (11; 120) étant ainsi conçu qu'une partie de la lumière de la lampe incidente sur le corps au niveau du premier côté extérieur passe au travers et ressort vers le bas au niveau de la surface de sortie lumineuse opposée au premier côté extérieur et une autre partie de la lumière de la lampe incidente sur le corps au niveau du premier côté extérieur est réfléchie sur ou dans le corps et est diffusée au moins en partie dans une direction opposée au corps vers le haut pour un éclairage indirect du luminaire, sachant qu'une lampe (3; 40, 103, 105; 122), dont la lumière irradie sur le premier côté extérieur du corps (11; 120), ou un réflecteur (124), dont la lumière d'une lampe réfléchit sur le premier côté extérieur du corps, est disposé(e) de manière décalée sur le côté du corps et sur le premier côté extérieur du corps dans une direction perpendiculaire à ce côté, la structure réfractive générant un écran de lumière émergeant sur la surface de sortie lumineuse au-dessus d'un angle critique dans au moins un niveau perpendiculaire à la surface de sortie lumineuse, de telle sorte que au dessus de l'angle critique la luminance descend sous une limite prédéfinie, le luminaire comprenant au moins un conducteur de lumière creux (5; 101), qui est défini par un logement avec un espace creux (6), dans lequel au niveau au moins d'un côté la lumière est couplée à partir d'une ou de plusieurs des lampes, ses parois intérieures (7, 9) sont au moins en partie réfléchissantes, qui est limité au niveau d'un côté qui est différent du ou des côtés susmentionnés pour coupler la lumière, au moins en partie par le premier côté extérieur du corps susmentionné et qui comprend la surface de toit (7) opposée au corps (11; 120) qui est réfléchissante vers l'intérieur au moins en partie, et la surface de toit (7) étant formée totalement ou en partie comme une tôle perforée.

2. Luminaire selon la revendication 1, **caractérisé en ce que** l'interface est prévue avec une structure réfractive qui est conçue au moins par sections conformément à un modèle de ligne (28,30) à partir d'une ou plusieurs lignes, dont la ligne ou les lignes (28, 30) délimitent une ou plusieurs section(s) (24a, 24b; 26a, 26b) réfractive(s) allongée(s) sur des côtés opposés dont la largeur dans la direction perpendiculaire aux lignes est plus petite que sa longueur en direction des lignes, sachant que la structure réfractive génère, par rapport à une surface perpendiculaire à la ou les ligne(s), un écran de lumière émergeant de l'interface au-dessus d'un angle critique concernant une normale de l'interface.

3. Luminaire selon la revendication 2, **caractérisé en ce que** le corps comprend une seconde structure réfractive au niveau d'une seconde interface entre deux milieux d'indices de réfraction différents, qui se situe dans le trajet du faisceau lumineux de la lumière émergeant de la surface de sortie lumineuse après la première interface, laquelle structure est concue au moins par sections conformément à un modèle de ligne à partir d'une ou plusieurs lignes, dont la ligne ou les lignes (30) délimitent une ou plusieurs section(s) (26a, 26b) réfractive(s) allongée(s) sur des côtés opposés dont la largeur dans la direction perpendiculaire aux lignes est plus petite que sa longueur dans la direction des lignes, sachant que la seconde structure génère, par rapport à une surface perpendiculaire à la ou les ligne(s), un écran de lumière émergeant de la seconde interface au-dessus d'un angle critique concernant une normale de l'interface, les lignes de la seconde structure étant disposées par rapport aux lignes de la première structure de telle sorte que la lumière émergeant de la surface de sortie lumineuse est protégée au moins dans deux niveaux non parallèles perpendiculaires à la surface de sortie lumineuse au-dessus d'un angle critique concernant une normale à la surface de sortie lumineuse.

4. Luminaire selon la revendication 2 ou 3, **caractérisé en ce que** la première et/ou seconde structure est construite conformément a un modèle de lignes droites parallèles sans intersection (28a, 28b, 30a, 30b), entre lesquelles se trouvent des prismes (24a, 24b, 26a, 26b) comme des sections réfractives dont le profil de coupe transversale est essentiellement invariant par translation par rapport à la direction des lignes.

5. Luminaire selon la revendication 3 ou 4, **caractérisé en ce que** le corps comprend plusieurs éléments en forme de disque stratifiés (20, 22) dont les surfaces sont disposées parallelement les unes aux autres, la première structure étant formée dans une surface à partir d'un premier élément en forme de disque et la seconde structure dans une surface d'un second élément en forme de disque.

6. Luminaire selon l'une des revendications 1 à 5, **caractérisé par** un réflecteur (42) assigné à une ou plusieurs lampes, qui réfléchit la lumière de la lampe et/ou des lampes en partie sur le premier côté extérieur du corps (11; 120) et la délivre a partir du corps vers le haut pour générer une partie de lumière indirecte du luminaire.

7. Luminaire selon l'une des revendications précédentes, **caractérisé en ce que** la surface de toit (7) est en partie formée comme des miroirs semi-translucides.

8. Luminaire selon l'une des revendications précédentes, **caractérisé en ce que** la surface de toit comprend une structure réfractive (74) pour découpler la lumière dans la direction opposée à la surface de sortie lumineuse susmentionnée.

9. Luminaire selon l'une des revendications précédentes, **caractérisé en ce que** la surface de toit (7) se compose par sections d'un matériau clair.

10. Luminaire selon l'une des revendications précédentes, **caractérisé en ce que** la surface de toit (7) Se compose par sections d'un matériau complètement ou majoritairement réfléchissant.

11. Luminaire selon l'une des revendications précédentes, **caractérisé en ce que** la surface de toit (7) est formée par sections de manière réfléchissante diffuse.

Fig. 1

Fig. 2

Fig. 3

Fig. 4

Fig. 5

14

Fig. 6

Fig. 7

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0846915 A1
- US 5396350 A
- US 5555109 A
- US 5594830 A
- CH 670493A5